# EUROPEAN PATENT APPLICATION

(11) **EP 4 837 751 A1**
(43) Date of publication of application: **11.11.2026**
(21) Application number: 26175594.6
(22) Date of filing: 30.04.2026
(51) Int. Cl.: B60C 1/00, C08K 3/04, C08L 9/00, C08L 93/04

(54) **TIRE**

(30) Priority: 08.05.2025 JP 2025078039
(71) Applicant: Sumitomo Rubber Industries, Ltd., Kobe-shi, Hyogo 651-0072 (JP)
(72) Inventor: MIZOUE, YOKO, Kobe-shi, Hyogo 651-0072 (JP)
(74) Representative: Manitz Finsterwald Patent- und Rechtsanwaltspartnerschaft mbB

(57) **Abstract**

Provided is a tire comprising a sidewall, wherein the sidewall is composed of a rubber composition comprising a rubber component, a filler, and a plasticizing agent, wherein the plasticizing agent comprises a rosin-based resin, and wherein T/P is less than 1.00, where P represents a total content, in % by mass, of plasticizing agents in the rubber composition and T represents a thickness, in mm, of a surface rubber layer at the tire maximum width position.

## Description

### TECHNICAL FIELD

The present invention relates to a tire.

### BACKGROUND OF THE INVENTION

In recent years, there has been a demand for a weight reduction of a tire in order to improve fuel efficiency of a vehicle. The weight reduction of the tire is performed, for example, by reducing a thickness of a sidewall rubber (thinning). However, such weight reduction of a tire causes a problem of deteriorating steering stability accompanied by a decrease in rigidity of the tire.

JP H07-215018 A describes a tire in which a sidewall rubber is formed using a filler-mixed rubber in which inorganic hollow fillers are mixed in a rubber substrate to reduce a weight of the tire and improve steering stability.

### SUMMARY OF THE INVENTION

It is an object of the present invention to provide a tire that can improve in steering stability.

The present invention relates to a tire comprising a sidewall, wherein the sidewall is composed of a rubber composition comprising a rubber component, a filler, and a plasticizing agent, wherein the plasticizing agent comprises a rosin-based resin, and wherein T/P is less than 1.00, where P represents a total content, in % by mass, of plasticizing agents in the rubber composition and T represents a thickness, in mm, of a surface rubber layer at the tire maximum width position.

According to the present invention, provided is a tire that can improve in steering stability.

### BRIEF DESCRIPTION OF THE DRAWINGS

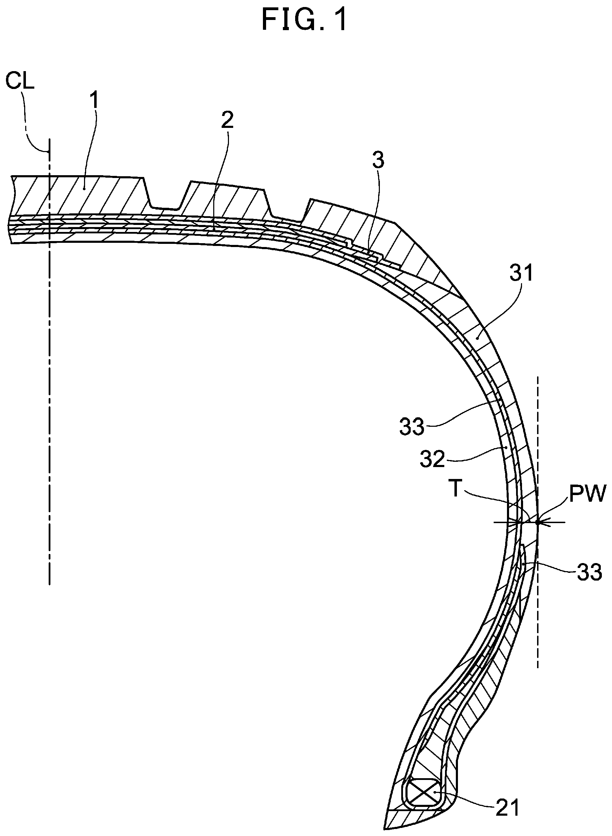

FIG. 1 is a cross-sectional view of one example of a tire that is one embodiment of the present invention.

### DETAILED DESCRIPTION

The tire that is one embodiment of the present invention is a tire comprising a sidewall, wherein the sidewall is composed of a rubber composition comprising a rubber component, a filler, and a plasticizing agent, wherein the plasticizing agent comprises a rosin-based resin, and wherein T/P is less than 1.00, where P represents a total content, in % by mass, of plasticizing agents in the rubber composition and T represents a thickness, in mm, of a surface rubber layer at the tire maximum width position.

Although it is not intended to be bound by a theory, for example, the following can be considered as a mechanism for improving steering stability in the tire of the present invention.
(1) It is considered that compounding the rosin-based resin in the sidewall rubber promotes dispersion of sulfur to improve tensile characteristics.
(2) Moreover, it is considered that responsiveness can be improved by setting a ratio (T/P) of the thickness T, in mm, of the surface rubber layer at the tire maximum width position to the total content P, in % by mass, of plasticizing agents in the rubber component within the above-described range.

It is considered that, with cooperation of the above-described (1) and (2), a remarkable effect of improving steering stability of the tire is achieved.

The plasticizing agent preferably comprises a vegetable oil from the viewpoint of processability.

The rosin-based resin is preferably a hydrogenated rosin-based resin from the viewpoints of tensile characteristics and reinforcing property.

T/P is preferably less than 0.90 from the viewpoint of the effects of the present invention.

P is preferably 3.2 or more from the viewpoint of the effects of the present invention.

A content of the rosin-based resin in the plasticizing agent is preferably 20% by mass or more from the viewpoint of the effects of the present invention.

The rubber component preferably comprises 30% by mass or more of an isoprene-based rubber from the viewpoint of the effects of the present invention.

A total content of fillers based on 100 parts by mass of the rubber component in the rubber composition is preferably 30 parts by mass or more from the viewpoint of the effects of the present invention.

F×T is preferably 200 or less from the viewpoint of the effects of the present invention, where F represents a total content, in parts by mass, of fillers based on 100 parts by mass of the rubber component in the rubber composition.

### <Definitions>

A "standardized state" is a state where a tire is rim-assembled on a standardized rim and air under a standardized internal pressure is filled, and no load is applied. Unless otherwise specified, a tire in the standardized state is used.

A "dimension of each part of the tire" is a value specified in a standardized condition for one appearing on the outer surface of the tire, unless otherwise specified, while it is a value specified in a condition where, for example, the tire is cut on a plane including a tire rotation axis and the cut tire piece is held to a rim width of a standardized rim for one present inside the tire or on a tire cutting surface.

A "standardized rim" is a rim in a standard system including a standard on which the tire is based, defined by the standard for each tire. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of tires that are not defined by the standard, the standardized rim shall refer to one which can be assembled to the tire and whose width is narrowest among rims having the smallest diameter that can maintain an internal pressure (i.e., do not cause air leakage between the rim and the tire).

A "standardized internal pressure" is an air pressure in a standard system including a standard on which the tire is based, defined by the standard for each tire, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in a case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load in kg" is a load in a standard system including a standard on which the tire is based, defined by the standard for each tire, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in a case of tires that are not defined by the standard, the maximum load capacity W_{L} calculated separately is defined as a standardized load.

The "maximum load capacity W_{L}, in kg" is calculated by the following equations. "V" is a virtual volume, in mm³, of a tire, "Dt" is a tire outer diameter, in mm, in a standardized state, "Ht" is a tire cross-sectional height, in mm, in a tire radial direction on a cross section of the tire in a plane including a tire rotation axis, and "Wt" is a tire cross-sectional width, in mm, in a standardized state. When R represents a rim diameter of the tire, Ht can be calculated by (Dt-R)/2. Wt is a value obtained by excluding, if any, patterns or characters on the side surface of the tire. Besides, the "maximum load capacity" has the same meaning as the above-described standardized load. ${W}_{L} = 0 . 000011 \times V + 175$ $V = \left\{{\left(Dt/2\right)}^{2}-{\left(Dt/2-Ht\right)}^{2}\right\} \times π \times Wt$

The "thickness T of the surface rubber layer at the tire maximum width position" is a distance, in mm, from a sidewall surface to a carcass cord surface, measured along a normal line L of the tire maximum width position PW of a pair of sidewalls 31, which is the maximum distance. The "tire maximum width position PW" refers to the maximum width position in a tire width direction on a plane passing through a tire rotation axis. The "surface rubber layer" shall include a sidewall rubber.

A "rubber component of a rubber composition" is a component that contributes to crosslinking in the rubber composition and generally has a weight-average molecular weight (Mw) of 10,000 or more.

A "plasticizing agent" is a material that imparts plasticity to a rubber component, which is a component extracted from a rubber composition using acetone. Moreover, the plasticizing agent includes a plasticizing agent that is liquid (in a liquid state) at 25°C and a plasticizing agent that is solid at 25°C. However, it shall not comprise wax and stearic acid commonly used in the tire industry.

A "content of a plasticizing agent" also includes an amount of a plasticizing agent contained in an extended rubber component previously extended with the plasticizing agent such as oil, a resin component, a liquid rubber component, and the like. The same applies to a content of oil, a content of a resin component, and a content of a liquid rubber, for example, an extending oil is included in the content of oil when an extending component is oil.

### <Measuring method>

A "cis content (cis-1,4-bond butadiene unit amount)" is a value measured by infrared absorption spectrometry or NMR measurement (¹H-NMR or 13C-NMR) according to JIS K 6239-2:2017 and is applied to, for example, a rubber component having a repeating unit derived from butadiene such as a BR and the like.

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKgel (Registered Trademark) SuperMultiporeHZ-M manufactured by Tosoh Corporation). For example, it is applied to an SBR, a BR, a plasticizing agent, and the like.

A "nitrogen adsorption specific surface area (N₂SA) of carbon black" is measured according to JIS K 6217-2:2017.

A "nitrogen adsorption specific surface area (N₂SA) of silica" is measured by the BET method according to ASTM D3037-93.

An "average primary particle size" is a value obtained by photographing particles using a transmission or scanning electron microscope and calculating an arithmetic average of particle sizes of 400 particles. If a shape of the particle is spherical, a diameter of the sphere is defined as a particle size, and if the shape is other than spherical, a circle equivalent diameter (positive square root of {4 × (area of particle)/π}) is calculated from the microscope image to be defined as a particle size. The average primary particle size is applied to silica, carbon black, etc.

A "softening point of a resin component" is a temperature at which a sphere drops when the softening point specified in JIS K 6220-1:2015 7.7 is measured with a ring and ball softening point measuring device.

A procedure for producing a tire that is one embodiment of the present invention will be described in detail below. However, the following descriptions are illustrative for explaining the present invention, and are not intended to limit the technical scope of the present invention to this description range only.

### <Tire>

The tire relating to the present embodiment comprises a sidewall composed of a rubber composition described below. The tire of one embodiment of the present invention will be described below with reference to the drawings, but the drawings are merely illustrative. Moreover, the embodiment shown below is merely an example.

FIG. 1 is a cross-sectional view of a tire in a plane passing through a rotation axis of the tire, showing only the right side of the tire divided by a center line CL of the tire. The tire in FIG. 1 comprises a tread 1, a pair of sidewalls 31 arranged on both sides of the tread, an inner liner 32, a pair of bead parts having a bead core 21, at least one layer of a carcass 33 moored to the bead core 21, at least one layer of a belt 2 arranged on an outer side of the carcass 33 in a tire radial direction, and a band 3 covering the belt 2.

The thickness T of the surface rubber layer at the tire maximum width position is preferably 1.0 mm or more, more preferably 1.5 mm or more, further preferably 2.0 mm or more, from the viewpoint of the effects of the present invention. Moreover, T is preferably less than 8.0 mm, more preferably less than 6.0 mm, further preferably less than 4.0 mm, particularly preferably less than 3.5 mm, from the viewpoint of the effects of the present invention.

T/P is less than 1.00, preferably less than 0.97, more preferably less than 0.94, further preferably less than 0.90, from the viewpoint of the effects of the present invention, where P represents a total content, in % by mass, of plasticizing agents in the rubber composition constituting the sidewall. On the other hand, a lower limit value of T/P is, but not particularly limited to, preferably greater than 0.10, more preferably greater than 0.20, further preferably greater than 0.30, further preferably greater than 0.40, particularly preferably greater than 0.50. Besides, a preferred range of P will be mentioned later.

F×T is preferably 500 or less, more preferably 350 or less, further preferably 250 or less, further preferably 200 or less, particularly preferably 180 or less, from the viewpoint of the effects of the present invention, where F represents a total content, in parts by mass, of fillers based on 100 parts by mass of the rubber component in the rubber composition constituting the sidewall. On the other hand, a lower limit value of F×T is, but not particularly limited to, preferably 20 or more, more preferably 40 or more, further preferably 60 or more, further preferably 80 or more, particularly preferably 100 or more. Besides, a preferred range of F will be mentioned later.

### [Rubber composition]

The rubber composition constituting the sidewall relating to the present embodiment (hereinafter referred to as the rubber composition relating to the present embodiment) comprises a rubber component, a filler, and a plasticizing agent, any of which can be produced using raw materials described below. The rubber composition relating to the present embodiment will be described below.

### <Rubber component>

The rubber component relating to the present embodiment preferably comprises a diene-based rubber. Moreover, the rubber component preferably comprises an isoprene-based rubber, more preferably comprises an isoprene-based rubber and a butadiene rubber and/or a styrene-butadiene rubber, and further preferably comprises an isoprene-based rubber and a butadiene rubber. Moreover, the rubber component may be a rubber component consisting of an isoprene-based rubber and a butadiene rubber, or may be a rubber component consisting of an isoprene-based rubber and a styrene-butadiene rubber.

Examples of the diene-based rubber include, for example, an isoprene-based rubber, a styrene-butadiene rubber (SBR), a butadiene rubber (BR), a styrene-isoprene rubber (SIR), a styrene-isoprene-butadiene rubber (SIBR), a chloroprene rubber (CR), an acrylonitrile-butadiene rubber (NBR), and the like. Moreover, these diene-based rubbers may be modified rubbers treated with modifying groups capable of interacting with fillers such as carbon black, silica, and the like, or may be hydrogenated rubbers obtained by hydrogenating a part of an unsaturated bond. The diene-based rubber may be used alone, or two or more thereof may be used in combination. Moreover, as the diene-based rubber, an extended rubber which has been previously extended with a plasticizing agent which will be mentioned later may be used.

A content of a diene-based rubber in the rubber component is preferably 70% by mass or more, more preferably 80% by mass or more, further preferably 90% by mass or more, particularly preferably 95% by mass or more. Moreover, the rubber component may be one consisting of a diene-based rubber.

### (Isoprene-based rubber)

As an isoprene-based rubber, for example, those common in the tire industry can be used, such as an isoprene rubber (IR), a natural rubber, and the like. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

An NR is not particularly limited, and those common in the tire industry can be used, examples of which include, for example, SIR20, RSS#3, TSR20, and the like.

A content of an isoprene-based rubber in the rubber component is preferably 20% by mass or more, more preferably 25% by mass or more, further preferably 30% by mass or more, further preferably 35% by mass or more, particularly preferably 40% by mass or more, from the viewpoint of the effects of the present invention. On the other hand, an upper limit value of the content is, but not particularly limited to, preferably 90% by mass or less, more preferably 80% by mass or less, further preferably 70% by mass or less, further preferably 60% by mass or less, particularly preferably 50% by mass or less.

### (BR)

A BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. These BRs may be used alone, or two or more thereof may be used in combination.

As the high cis BR, for example, those commercially available from Zeon Corporation, UBE Corporation, JSR Corporation, etc. can be used. When the high cis BR is compounded, low temperature characteristics and abrasion resistance can be improved. A cis content of the high-cis BR is preferably greater than 95 mol%, more preferably greater than 96 mol%, further preferably greater than 97 mol%. Besides, the cis content of the BR is measured by the above-described measuring method.

A weight-average molecular weight (Mw) of a BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the Mw of the BR is measured by the above-described measuring method.

A content of a BR in the rubber component is preferably 20% by mass or more, more preferably 30% by mass or more, further preferably 40% by mass or more, particularly preferably 50% by mass or more, from the viewpoint of the effects of the present invention. On the other hand, an upper limit value of the content is, but not particularly limited to, preferably 80% by mass or less, more preferably 75% by mass or less, further preferably 70% by mass or less, particularly preferably 65% by mass or less.

### (SBR)

An SBR is not particularly limited, examples of which include, for example, an unmodified solution-polymerized SBR (S-SBR) and an emulsion-polymerized SBR (E-SBR), modified SBRs (a modified S-SBR, a modified E-SBR) thereof, and the like. Examples of the modified SBR include an SBR modified at its terminal and/or main chain, a modified SBR coupled with tin, a silicon compound, etc. (a modified SBR of condensate or having a branched structure, etc.), and the like. Furthermore, hydrogenated ones of these SBRs (hydrogenated SBRs) and the like can also be used. These SBRs may be used alone, or two or more thereof may be used in combination.

As an SBR, an oil-extended SBR can be used, or a non-oil-extended SBR can be used. An extending oil amount of an SBR, i.e., a content of an extending oil contained in the SBR when used is preferably 10 to 50 parts by mass based on 100 parts by mass of a rubber solid content of the SBR.

Example of SBRs that can be used in the present embodiment include, for example, those commercially available from JSR Corporation, Sumitomo Chemical Co., Ltd., UBE Corporation, Asahi Kasei Corporation, ZS Elastomer Co., Ltd., ARLANXEO, etc.

A content of an SBR when compounded in the rubber component is preferably less than 40% by mass, more preferably less than 30% by mass, further preferably less than 20% by mass, particularly preferably less than 10% by mass, from the viewpoint of the effects of the present invention. On the other hand, a lower limit value of the content is not particularly limited.

### (Other rubber components)

The rubber component may comprise rubber components other than diene-based rubbers as long as they do not affect the effects of the present invention. As other rubber components other than diene-based rubbers, crosslinkable rubber components commonly used in the tire industry can be used, examples of which include, for example, non-diene-based rubbers such as a butyl rubber (IIR), a halogenated butyl rubber, an ethylene-propylene rubber, a polynorbornene rubber, a silicone rubber, a polyethylene chloride rubber, a fluorine rubber (FKM), an acrylic rubber (ACM), a hydrin rubber, and the like. Moreover, besides the above-described rubber components, the rubber component may or may not comprise a known thermoplastic elastomer. Other rubber components may be used alone, or two or more thereof may be used in combination.

### (Rubber component synthesized from recycle-derived/biomass-derived raw material)

A monomer that is a structural unit of a synthetic rubber such as an SBR, a BR, and the like may be one derived from underground resources such as petroleum, a natural gas, and the like, or a recycled one from a rubber product such as a tire and the like or a non-rubber product such as polystyrene and the like. A monomer obtained by recycling (a recycled monomer) is not particularly limited, examples of which include a recycle-derived polyisoprene, a recycle-derived butadiene, a recycle-derived aromatic vinyl compound, and the like. Examples of the butadiene include 1,2-butadiene, 1,3-butadiene, and the like. The above-described aromatic vinyl compound is not particularly limited, examples of which include styrene and the like. Among them, a recycle-derived polyisoprene (a recycled polyisoprene) a recycle-derived butadiene (a recycled butadiene) and/or a recycle-derived styrene (a recycled styrene) are preferably used as a raw material.

A method of producing a recycled monomer is not particularly limited, examples of which include, for example, a method of synthesizing a monomer from a recycle-derived naphtha obtained by decomposing a rubber product such as a tire and the like. Moreover, a method of producing a recycle-derived naphtha is not particularly limited, and a recycle-derived naphtha may be obtained from, for example, a rubber product such as a tire and the like by decomposing it under high temperature and pressure, by decomposing it by microwaves, or by mechanically pulverizing it and then extracting therefrom.

Furthermore, a monomer that is a structural unit of a polymer such as an IR, an SBR, a BR, and the like may be a biomass-derived one. In the present specification, biomass refers to a material derived from natural sources such as plants and the like. Biomass is not particularly limited, examples of which include, for example, agricultural, forestry and fishery products, sugar, wood waste, a plant residue after acquisition of a useful component, a plant-derived ethanol, a biomass naphtha, and the like.

The biomass-derived monomer (biomass monomer) is not particularly limited, examples of which include a biomass-derived butadiene, a biomass-derived aromatic vinyl compound, and the like. Examples of the butadiene include 1,2-butadiene, 1,3-butadiene, and the like. The above-described aromatic vinyl compound is not particularly limited, examples of which include styrene and the like. Moreover, a method of producing a biomass monomer is not particularly limited, examples of which include, for example, one by a biological and/or a chemical and/or a physical conversion of animals and plants, and the like. A microbial fermentation is representative of biological conversion, and examples of chemical and/or physical conversion include one due to a catalyst, one due to a high heat, one due to a high pressure, one due to an electromagnetic wave, one due to a critical fluid, and combinations thereof.

A polymer synthesized from a biomass monomer component (biomass polymer) is not particularly limited, examples of which include a butadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether a raw material of a polymer is derived from biomass can be determined by pMC (percent Modern Carbon) measured according to ASTM D6866-10. pMC is a ratio of ¹⁴C concentration of a sample to ¹⁴C concentration of a modern standard carbon (modern standard reference) and a value used as an index indicating a biomass ratio of a compound. A significance of this value is mentioned below.

In 1 mole of carbon atoms (6.02×10²³ pieces), there are about 6.02×10^{11 14}C that are about one trillionth of the number of normal carbon atoms. A half-life of ¹⁴C is 5730 years, and ¹⁴C regularly decreases. Thus, in fossil fuels such as coal, petroleum, a natural gas, and the like, where it is considered that 226,000 years or more have passed since carbon dioxide in the atmosphere was absorbed by plants to be fixed, all of ¹⁴C elements, which were contained in them at the beginning of fixation, decay. Therefore, in the present 21st century, fossil fuels such as coal, petroleum, a natural gas, and the like do not contain any ¹⁴C element. Therefore, chemical substances produced using these fossil fuels as raw materials do not contain any ¹⁴C element as well.

On the other hand, ¹⁴C is constantly generated by cosmic rays causing nuclear reactions in the atmosphere. Thus, decrease in ¹⁴C due to radioactive decay and generation of ¹⁴C due to nuclear reactions are balanced, and the amount of ¹⁴C has been constant in the Earth's atmospheric environment. Therefore, the ¹⁴C concentration of substances derived from biomass resources that have been circulating in the current environment becomes a value of about 1×10⁻¹² mol% based on total C atoms, as described above. Accordingly, by utilizing a difference between these values, a biomass ratio in a certain compound can be calculated.

This ¹⁴C is generally measured as follows. A ¹³C concentration (¹³C/¹²C) and a ¹⁴C concentration (¹⁴C/¹²C) are measured using an accelerator mass spectrometry based on a tandem accelerator. In the measurements, a ¹⁴C concentration in a circulating carbon in nature as of 1950 is adopted as the modern standard reference for the ¹⁴C concentration. As a specific reference material, an oxalic acid standard provided by NIST (National Institute of Standards and Technology) is used. A specific radioactivity of carbon in this oxalic acid (radioactivity intensity of ¹⁴C per gram of carbon) is sorted for each carbon isotope, 13C is corrected to a constant value, and a value corrected for attenuation from 1950 to the date of measurement is used as a standard ¹⁴C concentration value (100%). A ratio of this value to a value actually measured for a sample becomes a pMC value.

Thus, if a rubber is produced from a material derived from 100% biomass, the ¹⁴C concentration shows a value of approximately 110 pMC, often not being equal to 100 under a normal condition currently, though there are regional differences and the like. On the other hand, if this ¹⁴C concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, and the like, that is, a material such as a rubber having a high biomass ratio, and the like, for a rubber composition.

### <Filler>

The rubber composition relating to the present embodiment comprises a filler. The filler preferably comprises carbon black and may further comprise other fillers such as silica and the like. Moreover, the filler may be a filler consisting of carbon black.

Examples of carbon black include, but not particularly limited to, N134, N110, N220, N234, N219, N339, N330, N326, N351, N550, N762, and the like. A raw material of carbon black may be a biomass material such as lignin, a vegetable oil, and the like, or may be a pyrolysis oil obtained by pyrolyzing a waste tire. Moreover, a method of producing carbon black may be one by combustion such as a furnace method and the like, one by hydrothermal carbonization (HTC), or one by pyrolysis of methane such as a thermal black method and the like. As commercially available products, products from, Asahi Carbon Co., Ltd., Cabot Japan K.K., Tokai Carbon Co., Ltd., Mitsubishi Chemical Corporation, Lion Corporation, NIPPON STEEL Chemical & Material Co., Ltd., Columbia Chemical Corporation, etc. can be used. These carbon black may be used alone, or two or more thereof may be used in combination.

Moreover, besides the above-described carbon black, from the viewpoint of life cycle assessment, carbon black made from a biomass material such as lignin and the like or a recovered carbon black obtained by pyrolyzing and refining a product including carbon black such as a tire and the like may be used as carbon black.

In the present specification, a "recovered carbon black" refers to a carbon black obtained by pulverizing a product such as a used tire comprising carbon black and the like and baking the pulverized product, in which, when the product is subjected to oxidative combustion by heating in the air, using a thermal weight measurement method according to JIS K 6226-2:2003, a ratio of a mass of ash (ash content), which is a component that does not combust, is 13% by mass or more. That is, a ratio of a mass (carbon amount) of a weight loss content due to the oxidative combustion of the recovered carbon black is 87% by mass or less. The recovered carbon black may be expressed by rCB.

The recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis at 550 to 800°C excluding oxygen or vacuum pyrolysis at a relatively low temperature, of an organic material ([0027]). Such carbon black obtained from the pyrolysis process usually lacks a functional group on its surface, as mentioned in [0004] of JP 6856781 B (A comparison of surface morphology and chemistry of pyrolytic carbon blacks with commercial carbon blacks, Powder Technology 160 (2005) 190-193).

The recovered carbon black may lack a functional group on its surface or may be treated so that its surface comprises a functional group. The treatment performed so that the surface of the recovered carbon black comprises a functional group can be implemented by a conventional method. For example, in EP3173251 A, carbon black comprising a hydroxyl and/or carboxyl group on its surface is obtained by treating carbon black obtained from a pyrolysis process with potassium permanganate under an acidic condition. Moreover, in JP 6856781 B, carbon black whose surface is activated is obtained by treating carbon black obtained from a pyrolysis process with an amino acid compound comprising at least one thiol group or disulfide group. The recovered carbon black relating to the present embodiment also comprises carbon black whose surface has been treated so as to comprise a functional group.

As the recovered carbon black, those commercially available from Strebl Green Carbon Pte Ltd., LD Carbon, etc. can be used.

A nitrogen adsorption specific surface area (N₂SA) of carbon black is preferably greater than 10 m²/g, more preferably greater than 20 m²/g, further preferably greater than 30 m²/g, particularly preferably greater than 40 m²/g, from the viewpoint of reinforcing property. Moreover, it is preferably less than 200 m²/g, more preferably less than 150 m²/g, further preferably less than 120 m²/g, from the viewpoints of heat generation and processability. Besides, the N₂SA of carbon black is measured by the above-described measuring method.

An average primary particle size of carbon black is preferably 95 nm or less, more preferably 80 nm or less, further preferably 85 nm or less. A lower limit of the average primary particle size is, but not particularly limited to, preferably 10 nm or more, more preferably 20 nm or more, further preferably 30 nm or more, particularly preferably 40 nm or more.

A content of carbon black based on 100 parts by mass of the rubber component is preferably 10 parts by mass or more, more preferably 20 parts by mass or more, further preferably 30 parts by mass or more, further preferably 40 parts by mass or more, particularly preferably 50 parts by mass or more, from the viewpoint of the effects of the present invention. Moreover, the content is preferably 110 parts by mass or less, more preferably 100 parts by mass or less, further preferably 90 parts by mass or less, particularly preferably 80 parts by mass or less.

### (Silica)

Silica is not particularly limited, and those common in the tire industry can be used, such as, for example, silica prepared by a dry process (anhydrous silica), silica prepared by a wet process (hydrous silica), and the like. A raw material of silica is not particularly limited, and may be, for example, mineral-derived raw materials such as quartz and the like, bio-derived raw materials such as rice husks and the like (e.g., silica made from a biomass material such as rice husks and the like), or silica recycled from a product containing silica. Among them, hydrous silica prepared by a wet process is preferable from the reason that it has many silanol groups. These silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as for a conventional wet silica, and filtering, washing with water, drying and pulverizing precipitates of the silicon dioxide.

As silica recycled from a product containing silica, for example, silica recovered from an electronic component such as a semiconductor and the like, a tire, a product containing silica such as a desiccant, a filtering material such as diatomaceous earth and the like, etc. can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (JP 2009-2594 A, Akita Prefectural University Web Journal B/2019, vol.6, p.216-222, etc.). As an amorphous silica extracted from rice husks, those commercially available from Wilmar, etc. can be used.

A nitrogen adsorption specific surface area (N₂SA) of silica is preferably 110 m²/g or more, more preferably 130 m²/g or more, further preferably 150 m²/g or more, particularly preferably 170 m²/g or more, from the viewpoints of fuel efficiency and abrasion resistance. Moreover, it is preferably 350 m²/g or less, more preferably 300 m²/g or less, further preferably 250 m²/g or less, from the viewpoints of fuel efficiency and processability. Besides, the N₂SA of silica is measured by the above-described measuring method.

An average primary particle size of silica is preferably 24 nm or less, more preferably 22 nm or less, further preferably 20 nm or less, particularly preferably 18 nm or less. A lower limit value of the average primary particle size is, but not particularly limited to, preferably 1 nm or more, more preferably 3 nm or more, further preferably 5 nm or more, from the viewpoint of dispersibility of silica. Besides, the average primary particle size of silica is measured by the above-described measuring method.

A content of silica when compounded based on 100 parts by mass of the rubber component is preferably less than 40 parts by mass, more preferably less than 30 parts by mass, further preferably less than 20 parts by mass, particularly preferably less than 10 parts by mass. On the other hand, a lower limit value of the content is not particularly limited.

### (Other fillers)

Fillers other than silica and carbon black are not particularly limited, and, for example, those commonly used in the tire industry can be compounded such as aluminum hydroxide, alumina (aluminum oxide), calcium carbonate, magnesium sulfate, talc, clay, and the like. These other fillers may be used alone, or two or more thereof may be used in combination.

A total content of fillers based on 100 parts by mass of the rubber component is preferably 20 parts by mass or more, more preferably 30 parts by mass or more, further preferably 40 parts by mass or more, particularly preferably 50 parts by mass or more, from the viewpoint of the effects of the present invention. Moreover, it is preferably 110 parts by mass or less, more preferably 100 parts by mass or less, further preferably 90 parts by mass or less, particularly preferably 80 parts by mass or less, from the viewpoints of fuel efficiency and elongation at break.

A content of carbon black in a filler is preferably 65% by mass or more, more preferably 80% by mass or more, further preferably 90% by mass or more, particularly preferably 95% by mass or more, and may be 100% by mass.

### (Silane coupling agent)

Silica is preferably used in combination with a silane coupling agent. The silane coupling agent is not particularly limited, and any silane coupling agent used in combination with silica in the tire industry can be used, examples of which include, for example, mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycydoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among them, sulfide-based silane coupling agents and/or mercapto-based silane coupling agents are preferably compounded. As the silane coupling agent, for example, those commercially available from Evonik Industries AG, Momentive Performance Materials, etc. can be used. The silane coupling agent may be used alone, or two or more thereof may be used in combination.

A content of a silane coupling agent based on 100 parts by mass of silica is preferably 1.0 parts by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

### <Plasticizing agent>

The rubber composition relating to the present embodiment comprises a plasticizing agent as an essential component. In the present specification, a "plasticizing agent" is a material that imparts plasticity to the rubber component, and has a concept that includes both a plasticizing agent in liquid (in a liquid state) at 25°C and a plasticizing agent that is solid at 25°C. Examples of the plasticizing agent include, a resin component, oil, a liquid rubber, an ester-based plasticizing agent, and the like. These plasticizing agents may be petroleum-derived ones, biomass-derived ones, or naphtha-derived ones recycled from rubber products or non-rubber products. Moreover, a hydrocarbon component having a low-molecular weight obtained by pyrolyzing and extracting a used tire or a product comprising various components may be used as a plasticizing agent. These plasticizing agents may be used alone, or two or more thereof may be used in combination.

### (Resin component)

The resin component relating to the present embodiment comprises a rosin-based resin, and other resin components may be used in combination. The other resin components that can be used in the present embodiment is not particularly limited, and any resin commonly used in the tire industry can be used, examples of which include, for example, a C9-based resin, a C5-based resin, a C5/C9-based resin, a dicyclopentadiene-based resin, an aromatic vinyl-based resin, a coumarone-based resin, an indene-based resin, a terpene-based resin, a phenol-based resin, and the like. These resin components may be used alone, or two or more thereof may be used in combination. Each resin component may also be used alone, respectively, or two or more thereof may be used in combination.

### <<C9-based resin>>

A "C9-based resin" refers to a resin obtained by polymerizing C9 fractions, and may be a polymer obtained by polymerizing a C9 fraction alone or a copolymer obtained by copolymerizing a C9 fraction with other components. For example, resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

### <<C5-based resin>>

A "C5-based resin" refers to resin obtained by polymerizing C5 fractions and may be one obtained by hydrogenating or modifying them. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

### <<C5/C9-based resin>>

A "C5/C9-based resin" refers to a resin obtained by copolymerizing the C5 fraction and the C9 fraction and may be one obtained by hydrogenating or modifying them. As the C5/C9-based resin, for example, those commercially available from Tosoh Corporation, Zibo Luhua Hongjin New Material Group Co., Ltd, etc. can be appropriately used.

### <<Dicyclopentadiene-based resin>>

A "dicyclopentadiene-based resin" refers to a resin comprising cyclopentadiene (CPD) and/or dicyclopentadiene (DCPD) as a monomer component having the largest content and may be one obtained by hydrogenating or modifying them. As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil Corporation, ENEOS Corporation, Zeon Corporation, Maruzen Petrochemical Co., Ltd., etc. can be used.

### <<Aromatic vinyl-based resin>>

An "aromatic vinyl-based resin" refers to a resin comprising an aromatic vinyl compound such as styrene, α-methylstyrene, vinyltoluene, p-chlorostyrene, and the like as a monomer component having the largest content, and may be one obtained by hydrogenating or modifying them. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

### <<Coumarone-based resin>>

A "coumarone-based resin" refers to a resin comprising coumarone as a monomer component and may be one obtained by hydrogenating or modifying it. As the coumarone-based resin, for example, a coumarone resin that is a polymer comprising only coumarone as a monomer component, a coumarone-indene resin that is a copolymer comprising coumarone and indene as monomer components, a coumarone-indene-styrene resin that is a copolymer comprising coumarone, indene, and styrene as monomer components, and the like are preferable. As the coumarone-based resin, for example, those commercially available from Rutgers Chemicals, Nitto Chemical Co., Ltd., Mitsui Chemicals, Inc., etc. can be used.

### <<Indene-based resin>>

An "indene-based resin" refers to a resin comprising indene as a monomer component and may be one obtained by hydrogenating or modifying it. As the indene-based resin, for example, a coumarone-indene resin that is a copolymer comprising coumarone and indene as monomer components, a coumarone-indene-styrene resin that is a copolymer comprising coumarone, indene, and styrene as monomer components, and the like are preferable. As the indene-based resin, for example, those commercially available from Rutgers Chemicals, Nitto Chemical Co., Ltd., Mitsui Chemicals, Inc., etc. can be used.

### <<Terpene-based resin>>

A "terpene-based resin" refers to a resin comprising a terpene compound such as α-pinene, β-pinene, limonene, dipentene, and the like as a monomer component, and may be one obtained by hydrogenating or modifying them. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, α-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

### <<Rosin-based resin>>

A "rosin-based resin" refers to a resin comprising a rosin acid compound such as abietic acid, neoabietic acid, palustric acid, isopimaric acid, and the like, and may be one obtained by hydrogenating or modifying them. Example of the rosin-based resin include, but not particularly limited to, for example, a natural resin rosin and a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., IREC Co., Ltd., etc. can be used.

### <<Phenol-based resin>>

A "phenol-based resin" refers to a resin comprising a phenolic compound such as phenol, cresol, and the like as a monomer component, and may be one obtained by hydrogenating or modifying them. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

A softening point of a resin component is preferably 60°C or higher, more preferably 70°C or higher, further preferably 80°C or higher, from the viewpoint of grip performance. Moreover, it is preferably 150°C or lower, more preferably 140°C or lower, further preferably 130°C or lower, from the viewpoints of processability and improvement in dispersibility of a rubber component with a filler. Besides, the softening point of the resin component is measured by the above-described measuring method.

A content of a rosin-based resin based on 100 parts by mass of the rubber component is preferably 0.5 parts by mass or more, more preferably 1.0 parts by mass or more, further preferably 1.5 parts by mass or more, particularly preferably 2.0 parts by mass or more, from the viewpoint of the effects of the present invention. On the other hand, the content is preferably 30 parts by mass or less, more preferably 20 parts by mass or less, further preferably 15 parts by mass or less, further preferably 10 parts by mass or less, further preferably 8.0 parts by mass or less, particularly preferably 6.0 parts by mass or less.

A content of a resin component based on 100 parts by mass of the rubber component (a total amount of a plurality of resin components when used in combination) is preferably 0.5 parts by mass or more, more preferably 1.0 parts by mass or more, further preferably 1.5 parts by mass or more, particularly preferably 2.0 parts by mass or more, from the viewpoint of the effects of the present invention. On the other hand, the content is preferably less than 50 parts by mass, more preferably less than 40 parts by mass, further preferably less than 30 parts by mass, further preferably less than 20 parts by mass, particularly preferably less than 10 parts by mass.

### (Oil)

Examples of oil include, for example, a mineral oil, a vegetable oil, an animal oil, and the like. Moreover, from the viewpoint of life cycle assessment, those obtained by purifying a waste oil after being used in a rubber mixer or an engine, or a waste cooking oil used in a restaurant, may be used. Oil may be used alone, or two or more thereof may be used in combination.

In the present specification, a mineral oil refers to oil derived from mineral resources such as petroleum, a natural gas, and the like. Examples of the mineral oil include paraffinic oils (mineral oils), naphthenic oils, aromatic oils, and the like. Specific examples of the mineral oil include, for example, MES (Mild Extracted Solvate), DAE (Distillate Aromatic Extract), TDAE (Treated Distillate Aromatic Extract), TRAE (Treated Residual Aromatic Extract), RAE (Residual al Aromatic Extract), and the like. Moreover, as an environmental measure, an oil having a low content of a polycyclic aromatic compound (PCA) can also be used. Examples of the oil having a low content of a PCA content include MES, TDAE, a heavy naphthenic oil, and the like. The mineral oil may be used alone, or two or more thereof may be used in combination.

In the present specification, examples of the vegetable oil include, for example, a linseed oil, a rapeseed oil, a safflower oil, a soybean oil, a corn oil, a cottonseed oil, a rice oil, a tall oil, a sesame oil, a perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oil also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at 25°C. The vegetable oil may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. Acylglycerol is not particularly limited, and may be 1-monoacylglycerol, 2-monoacylglycerol, 1,2-diacylglycerol, 1,3-diacylglycerol, or triacylglycerol. Furthermore, acylglycerol may be a monomer, a dimer, or a multimer that is a trimer or higher. Besides, acylglycerol that is a dimer or higher can be obtained by thermal polymerization, oxidative polymerization, or the like. In addition, acylglycerol may be liquid or solid at 25°C.

As a method of confirming whether the rubber composition comprises acylglycerol, the confirmation can be performed by, but not particularly limited to, ¹H-NMR measurement. For example, a rubber composition comprising triacylglycerol is immersed in a heavy chloroform at 25°C for 24 hours and removed to measure ¹H-NMR under a room temperature, and when a signal of tetramethylsilane (TMS) is set to 0.00 ppm, signals near 5.26 ppm, near 4.28 ppm, and near 4.15 ppm are observed, the signals being presumed to be derived from hydrogen atoms bonded to carbon atoms adjacent to oxygen atoms of an ester group. Besides, "near" in this paragraph shall be a range of ±0.10 ppm.

The above-described fatty acid is not particularly limited and may be an unsaturated fatty acid or a saturated fatty acid. Examples of the unsaturated fatty acid include a monounsaturated fatty acid such as oleic acid and the like, and a polyunsaturated fatty acid such as linoleic acid, linolenic acid, and the like. Moreover, examples of the saturated fatty acid include butyric acid, lauric acid, and the like.

Among them, as the fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid may be used, or a vegetable oil modified by transesterification or the like may be used. Moreover, in order to produce a vegetable oil comprising such fatty acid, a plant may be improved by selective breeding, gene recombination, genome editing, or the like.

As the vegetable oil, for example, those commercially available from Idemitsu Kosan Co., Ltd., Sankyo Yuka Kogyo K.K., ENEOS Corporation, Olisoy, H&R Group, Hokoku Corporation, Fuji Kosan Co., Ltd., The Nisshin OilliO Group, Ltd., etc. can be used.

Examples of the animal oil include a fish oil, a beef tallow, a whale oil, or an oleyl alcohol that may be derived therefrom, etc.

A content of an unsaturated fatty acid contained in the constituent fatty acid of the vegetable oil is preferably 50% by mass or more, more preferably 60% by mass or more, further preferably 70% by mass or more, further preferably 75% by mass or more, further preferably 80% by mass or more, particularly preferably 85% by mass or more.

A content of a vegetable oil when compounded based on 100 parts by mass of the rubber component is preferably 0.5 parts by mass or more, more preferably 1.0 parts by mass or more, further preferably 1.5 parts by mass or more, particularly preferably 2.0 parts by mass or more, from the viewpoint of processability. On the other hand, the content is preferably 30 parts by mass or less, more preferably 20 parts by mass or less, further preferably 15 parts by mass or less, further preferably 10 parts by mass or less, further preferably 8.0 parts by mass or less, particularly preferably 6.0 parts by mass or less.

A content of oil based on 100 parts by mass of the rubber component (a total amount of a plurality of oil when used in combination) is preferably 0.5 parts by mass or more, more preferably 1.0 parts by mass or more, further preferably 1.5 parts by mass or more, particularly preferably 2.0 parts by mass or more. On the other hand, the content is preferably less than 50 parts by mass, more preferably less than 40 parts by mass, further preferably less than 30 parts by mass, further preferably less than 20 parts by mass, particularly preferably less than 10 parts by mass.

### (Liquid rubber)

A liquid rubber is not particularly limited as long as it is a polymer in a liquid state at 25°C, examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. These liquid rubbers may be used alone, or two or more thereof may be used in combination.

### (Ester-based plasticizing agent)

Examples of the ester-based plasticizing agent include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agent may be used alone, or two or more thereof may be used in combination.

A total content P of plasticizing agents in the rubber composition is preferably 1.0% by mass or more, more preferably 1.5% by mass or more, further preferably 2.0% by mass or more, further preferably 2.5% by mass or more, further preferably 2.8% by mass or more, further preferably 3.0% by mass or more, particularly preferably 3.2% by mass or more, from the viewpoint of the effects of the present invention. Moreover, the content is preferably less than 30% by mass, more preferably less than 20% by mass, further preferably less than 15% by mass, further preferably less than 10% by mass, further preferably less than 8.0% by mass, particularly preferably less than 6.0% by mass.

A content of a rosin-based resin in a plasticizing agent is preferably 20% by mass or more, more preferably 25% by mass or more, further preferably 30% by mass or more, further preferably 40% by mass or more, particularly preferably 50% by mass or more, from the viewpoint of the effects of the present invention. Moreover, an upper limit value of the content is, but not particularly limited to, preferably less than 95% by mass, more preferably less than 90% by mass, further preferably less than 85% by mass, particularly preferably less than 80% by mass.

### <Other compounding agents>

The rubber composition relating to the present embodiment can appropriately comprise compounding agents conventionally and commonly used in the tire industry, for example, a vulcanized rubber particle, processing aid, wax, an antioxidant, stearic acid, zinc oxide, a vulcanizing agent, a vulcanization accelerator, and the like, in addition to rubber components, fillers, and plasticizing agents.

A vulcanized rubber particle is a particle made of a vulcanized rubber, and specifically, a rubber powder and the like specified in JIS K 6316:2017 can be used. From the viewpoints of environmental considerations and costs, a recycled rubber powder produced from a pulverized product of a waste tire or the like is preferable. The vulcanized rubber particle may be used alone, or two or more thereof may be used in combination.

The vulcanized rubber particle is not particularly limited and may be a non-modified vulcanized rubber particle or a modified vulcanized rubber particle. As commercially available products of vulcanized rubbers, for example, products from Lehigh Technologies, Muraoka Rubber Reclaiming Co., Ltd., etc. can be used.

A content of a vulcanized rubber particle when compounded based on 100 parts by mass of the rubber component can be appropriately adjusted, for example, within a range of greater than 1 part by mass and less than 80 parts by mass.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. These processing aid may be used alone, or two or more thereof may be used in combination. As processing aid, for example, those commercially available from Schill+Seilacher GmbH, Performance Additives, etc. can be used.

Wax is not particularly limited, and any of those commonly used in the tire industry can be appropriately used, examples of which include, for example, a mineral-based wax, a plant-derived wax, and the like. The mineral-based wax refers to wax derived from mineral resources such as oil, a natural gas, and the like. The plant-derived wax refers to wax derived from natural resources such as a plant and the like. Among them, the mineral-based wax is preferable. Examples of the plant-derived wax include, for example, a rice wax, a carnauba wax, a candelilla wax, and the like. Examples of the mineral-based wax include, for example, a paraffin wax, a microcrystalline wax, specially selected waxes thereof, and the like. Among them, a paraffin wax is preferable. Besides, wax relating to the present embodiment shall not comprise stearic acid. As wax, for example, those commercially available from Ouchi Shinko Chemical Industry Co., Ltd., Nippon Seiro Co., Ltd., Paramelt B.V., etc. can be used. These waxes may be used alone, or two or more thereof may be used in combination.

A content of wax when compounded based on 100 parts by mass of the rubber component is preferably 0.1 parts by mass or more, more preferably 0.5 parts by mass or more, further preferably 1.0 parts by mass or more, from the viewpoint of weather resistance of a rubber. Moreover, it is preferably 10 parts by mass or less, more preferably 5.0 parts by mass or less, from the viewpoint of preventing whitening of a tire due to bloom.

Examples of the antioxidant include, but not particularly limited to, a naphthylamine-based antioxidant such as phenyl-α-naphthylamine and the like; a diphenylamine-based antioxidant such as an octylated diphenylamine, 4,4'-bis(α,α'-dimethylbenzyl)diphenylamine, and the like; p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, a styrenated phenol, and the like; bis-, tris-, and polyphenol-based antioxidants such as tetrakis-[methylene-3-(3',5'-di-t-butyl-4'-hydroxyphenyl)propionate]methane and the like. Among them, p-phenylenediamine-based antioxidants and quinoline-based antioxidants are preferable, and N-(1,3-dimethylbutyl)-N'-phenyl-p-phenylenediamine and a polymer of 2,2,4-trimethyl-1,2-dihydroquinoline are more preferable. As commercially available products, for example, products manufactured by Seiko Chemical Co., Ltd., Sumitomo Chemical Co., Ltd., Ouchi Shinko Chemical Industry Co., Ltd., Flexsys, etc. can be used. These antioxidants may be used alone, or two or more thereof may be used in combination.

A content of an antioxidant when compounded based on 100 parts by mass of the rubber component is preferably 0.5 parts by mass or more, more preferably 1.0 parts by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used. These types of sulfur may be used alone, or two or more thereof may be used in combination.

A content of sulfur based on 100 parts by mass of the rubber component is preferably 0.1 parts by mass or more, more preferably 0.2 parts by mass or more, further preferably 0.3 parts by mass or more, from the viewpoint of securing a sufficient vulcanization reaction. Moreover, the content is preferably less than 1.5 parts by mass, more preferably less than 1.1 parts by mass, further preferably less than 1.0 parts by mass, further preferably less than 0.8 parts by mass, particularly preferably less than 0.6 parts by mass, from the viewpoint of the effects of the present invention. Besides, a content of a vulcanizing agent when an oil-containing sulfur is used as the vulcanizing agent shall be a total content of pure sulfur comprised in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used. These vulcanizing agents may be used alone, or two or more thereof may be used in combination.

Examples of a vulcanization accelerator include, but not particularly limited to, for example, a sulfenamide-based vulcanization accelerator, a thiazole-based vulcanization accelerator, a guanidine-based vulcanization accelerator, a thiuram-based vulcanization accelerator, a thiourea-based vulcanization accelerator, a dithiocarbamic acid-based vulcanization accelerator, an aldehyde-amine-based vulcanization accelerator, an aldehyde-ammonia-based vulcanization accelerator, an imidazoline-based vulcanization accelerator, a xanthate-based vulcanization accelerator, a caprolactam disulfide, and the like. These vulcanization accelerators may be used alone, or two or more thereof may be used in combination. Among them, one or more vulcanization accelerators selected from the group consisting of a sulfenamide-based vulcanization accelerator, a thiazole-based vulcanization accelerator, and a guanidine-based vulcanization accelerator are preferable, from the viewpoint that desired effects can be obtained more appropriately.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, TBBS and CBS are preferable.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl)mercaptobenzothiazole, 2-(2,6-diethyl-4-morpholinothio)benzothiazole, and the like. Among them, MBTS and MBT are preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, DPG is preferable.

A content of a vulcanization accelerator when compounded based on 100 parts by mass of the rubber component is preferably 0.5 parts by mass or more, more preferably 1.0 parts by mass or more, further preferably 1.5 parts by mass or more, from the viewpoint of securing a sufficient vulcanization rate. Moreover, the content of the vulcanization accelerator is preferably 10 parts by mass or less, more preferably 5.0 parts by mass or less, from the viewpoint of suppressing blooming.

In the present specification, various materials comprising carbon atoms (for example, a rubber, oil, resin, a vulcanization accelerator, an antioxidant, a surfactant, etc.) may be derived from carbon dioxide in the atmosphere. As a method of obtaining the various materials from carbon dioxide, carbon dioxide may be directly converted, or methane obtained through a methanation step for synthesizing methane from carbon dioxide may be converted.

### [Production of rubber composition and tire]

The rubber composition relating to the present embodiment can be produced by a known method. For example, it can be produced by kneading each of the above-described components using a rubber kneading apparatus such as an open roll, a closed type kneader (Bunbury mixer, kneader, etc.), and the like. The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

A kneading condition is not particularly limited. Examples of kneading include, for example, in the base kneading step, a method of kneading at a discharge temperature at 150 to 170°C for 3 to 10 minutes, and in the final kneading step, a method of kneading at 70 to 110°C for 1 to 5 minutes. A vulcanization condition is not particularly limited. Examples of vulcanization include, for example, a method of vulcanizing at 150 to 200°C for 10 to 30 minutes.

The tire relating to the present embodiment comprising the sidewall composed of the rubber composition can be produced by a usual method. That is, an unvulcanized rubber composition corresponding to the sidewall obtained by the above-described method is extruded into a shape of the sidewall, which is then attached together with other tire members on a tire molding machine to be molded by a usual method, thereby forming an unvulcanized tire. This unvulcanized tire is heated and pressurized in a vulcanizer, whereby a tire relating to the present embodiment can be produced. A vulcanization condition is not particularly limited. Examples of vulcanization include, for example, a method of vulcanizing at 150 to 200°C for 10 to 30 minutes.

### <Applications>

The tire relating to the present embodiment can be appropriately used as a tire for a passenger car, a tire for a truck/bus, a motorcycle tire, or a racing tire. Among them, it is preferably used as a tire for a passenger car. Besides, the tire for a passenger car is a tire on the premise that it is mounted on a car running on four wheels and refers to one having a maximum load capacity of 1000 kg or less. Moreover, the tire relating to the present embodiment can be used as an all-season tire, a summer tire, or a winter tire such as a studless tire and the like.

### EXAMPLES

Examples considered to be preferable in implementation (Examples) are shown below, though the scope of the present invention is not limited to Examples. Results calculated based on the following evaluation methods considering a tire comprising a sidewall obtained according to the compounding in Tables 1, 2, and 3 using various chemicals shown below are shown in Tables 1, 2, and 3.

Various chemicals used in Examples and Comparative examples are collectively shown below.
IR-based rubber: TSR20 (NR)
BR: UBEPOL BR (Registered Trademark) 150B manufactured by UBE Corporation (cis content: 97 mol%, Mw: 440,000)
Carbon black: DIABLACK (Registered Trademark) E manufactured by Mitsubishi Chemical Corporation (FEF, N550, N₂SA: 41 m²/g, average primary particle size: 81 nm)
Oil: Soybean oil manufactured by The Nisshin OilliO Group, Ltd.
Rosin-based resin 1: HARISTER TF manufactured by Harima Chemicals Group, Inc. (softening point: 80°C)
Rosin-based resin 2: HARITACK AQ-90A manufactured by Harima Chemicals Group, Inc. (hydrogenated rosin-based resin, softening point: 105°C)
Wax: OZOACE 0355 manufactured by Nippon Seiro Co., Ltd.
Antioxidant: Nocrac 6C manufactured by Ouchi Shinko Chemical Industry Co., Ltd. (N-(1,3-dimethylbutyl)-N'-phenyl-p-phenylenediamine)
Stearic acid: Bead stearic acid "CAMELLIA" manufactured by NOF CORPORATION
Zinc oxide: Zinc oxide No. 1 manufactured by Mitsui Mining & Smelting Co., Ltd.
Sulfur: HK-200-5 manufactured by Hosoi Chemical Industry Co., Ltd. (5% oil-containing powdered sulfur)
Vulcanization accelerator: Nocceler NS-G manufactured by Ouchi Shinko Chemical Industry Co., Ltd. (N-tert-butyl-2-benzothiazolylsulfenamide (TBBS))

### (Examples and Comparative examples)

According to the compounding formulations shown in Tables 1, 2 and 3, using a 1.7 L closed Banbury mixer, all chemicals other than sulfur and vulcanization accelerators are kneaded for 5 minutes under a condition at 150°C to obtain a kneaded product. Next, sulfur and vulcanization accelerators are added to the obtained kneaded product, and the mixture is kneaded for 5 minutes under a condition at 80°C using an open roll to obtain an unvulcanized rubber composition. The unvulcanized rubber composition is molded into a shape of a sidewall, which is then attached together with other tire members, forming an unvulcanized tire, which is then press-vulcanized for 12 minutes under a condition at 170°C to obtain each test tire (tire size: 205/65R15) described in Tables 1, 2, and 3.

### <Steering stability>

Each test tire is mounted on all wheels of a vehicle (domestic FF, 2000 cc), and actual vehicle running with 10 laps is performed on a test course with a dry asphalt road surface at about 120 km/h. 10 test drivers perform a sensory evaluation of the vehicle's wobble when entering, turning, and exiting during cornering at that time. The evaluation is performed using an integer value of 1 to 5 points (the smaller the wobble is, the higher the point is) to calculate a total score by 20 test drivers. A total score of the reference Comparative examples (Comparative example 5 in Tables 1 and 2, Comparative example 6 in Table 3) is converted into a reference value (100), and the evaluation result for each test tire is indicated as an index in proportion to the total score. The results show that the larger the numerical value is, the better the steering stability is.

**Table 1**

| | Example | | | | |
|---|---|---|---|---|---|
| | 1 | 2 | 3 | 4 | 5 |
| Compounding amount (parts by mass) | | | | | |
| IR-based rubber | 45 | 45 | 45 | 45 | 45 |
| BR | 55 | 55 | 55 | 55 | 55 |
| Carbon black | 55 | 55 | 55 | 55 | 55 |
| Oil | 4.0 | 2.0 | 4.0 | 3.0 | 3.0 |
| Rosin-based resin 1 | 2.0 | 4.0 | 2.0 | 2.5 | 6.0 |
| Wax | 4.0 | 4.0 | 4.0 | 4.0 | 4.0 |
| Antioxidant | 4.0 | 4.0 | 4.0 | 4.0 | 4.0 |
| Stearic acid | 2.5 | 2.5 | 2.5 | 2.5 | 2.5 |
| Zinc oxide | 3.0 | 3.0 | 3.0 | 3.0 | 3.0 |
| Sulfur | 1.6 | 1.6 | 1.6 | 1.6 | 1.6 |
| Vulcanization accelerator | 1.0 | 1.0 | 1.0 | 1.0 | 1.0 |
| Total content P of plasticizing agents (% by mass) | 3.39 | 3.39 | 3.39 | 3.11 | 5.00 |
| Total content F of fillers (% by mass) | 55 | 55 | 55 | 55 | 55 |
| Thickness T of surface rubber layer (mm) | 3.0 | 3.0 | 2.0 | 3.0 | 3.0 |
| T/P | 0.88 | 0.88 | 0.59 | 0.96 | 0.60 |
| F×T | 165 | 165 | 110 | 165 | 165 |
| Steering stability index | 124 | 119 | 127 | 108 | 122 |

**Table 2**

| | Comparative example | | | | |
|---|---|---|---|---|---|
| | 1 | 2 | 3 | 4 | 5 |
| Compounding amount (parts by mass) | | | | | |
| IR-based rubber | 45 | 45 | 45 | 45 | 45 |
| BR | 55 | 55 | 55 | 55 | 55 |
| Carbon black | 55 | 55 | 55 | 55 | 55 |
| Oil | 3.0 | 1.5 | 3.0 | - | 6.0 |
| Rosin-based resin 1 | - | 1.5 | 2.5 | 3.0 | - |
| Wax | 4.0 | 4.0 | 4.0 | 4.0 | 4.0 |
| Antioxidant | 4.0 | 4.0 | 4.0 | 4.0 | 4.0 |
| Stearic acid | 2.5 | 2.5 | 2.5 | 2.5 | 2.5 |
| Zinc oxide | 3.0 | 3.0 | 3.0 | 3.0 | 3.0 |
| Sulfur | 1.6 | 1.6 | 1.6 | 1.6 | 1.6 |
| Vulcanization accelerator | 1.0 | 1.0 | 1.0 | 1.0 | 1.0 |
| Total content P of plasticizing agents (% by mass) | 1.72 | 1.72 | 3.11 | 1.72 | 3.39 |
| Total content F of fillers (% by mass) | 55 | 55 | 55 | 55 | 55 |
| Thickness T of surface rubber layer (mm) | 3.0 | 3.0 | 3.5 | 3.0 | 3.0 |
| T/P | 1.74 | 1.74 | 1.13 | 1.74 | 0.88 |
| F×T | 165 | 165 | 193 | 165 | 165 |
| Steering stability index | 95 | 89 | 92 | 86 | 100 |

**Table 3**

| | Example | Comparative example |
|---|---|---|
| | 6 | 6 |
| Compounding amount (parts by mass) | | |
| IR-based rubber | 45 | 45 |
| BR | 55 | 55 |
| Carbon black | 55 | 55 |
| Oil | 2.0 | 1.5 |
| Rosin-based resin 2 | 4.0 | 1.5 |
| Wax | 4.0 | 4.0 |
| Antioxidant | 4.0 | 4.0 |
| Stearic acid | 2.5 | 2.5 |
| Zinc oxide | 3.0 | 3.0 |
| Sulfur | 1.6 | 1.6 |
| Vulcanization accelerator | 1.0 | 1.0 |
| Total content P of plasticizing agents (% by mass) | 3.39 | 1.72 |
| Total content F of fillers (% by mass) | 55 | 55 |
| Thickness T of surface rubber layer (mm) | 3.0 | 3.0 |
| T/P | 0.88 | 1.74 |
| F×T | 165 | 165 |
| Steering stability index | 109 | 100 |

### REFERENCE SIGNS LIST

1. Tread
2. Belt
3. Band
21. Bead core
31. Sidewall
32. Inner liner
33. Carcass
CL. Tire center line
PW. Tire maximum width position
T. Thickness of surface rubber layer at tire maximum width position

## Claims

1. A tire comprising a sidewall,
wherein the sidewall is composed of a rubber composition comprising a rubber component, a filler, and a plasticizing agent,
wherein the plasticizing agent comprises a rosin-based resin, and
wherein T/P is less than 1.00, where P represents a total content, in % by mass, of plasticizing agents in the rubber composition and T represents a thickness, in mm, of a surface rubber layer at the tire maximum width position.

2. The tire of claim 1, wherein the plasticizing agent comprises a vegetable oil.

3. The tire of claim 1 or 2, wherein the rosin-based resin is a hydrogenated rosin-based resin.

4. The tire of any one of claims 1 to 3, wherein T/P is less than 0.90.

5. The tire of any one of claims 1 to 4, wherein P is 3.2 or more.

6. The tire of any one of claims 1 to 5, wherein a content of the rosin-based resin in the plasticizing agent is 20% by mass or more, preferably 25% by mass or more and less than 90% by mass.

7. The tire of any one of claims 1 to 6, wherein the rubber component comprises 30% by mass or more, preferably 35% by mass or more and 80% by mass or less of an isoprene-based rubber.

8. The tire of any one of claims 1 to 7, wherein a total content of fillers based on 100 parts by mass of the rubber component in the rubber composition is 30 parts by mass or more, preferably 35 parts by mass or more and 90 parts by mass or less.

9. The tire of any one of claims 1 to 8, wherein F×T is 200 or less, preferably 60 or more and 180 or less, where F represents a total content, in parts by mass, of fillers based on 100 parts by mass of the rubber component in the rubber composition.
